(19) Europäisches Patentamt
European Patent Office
Office européen des brevets

(11) EP 1 353 157 A1

(12) **EUROPÄISCHE PATENTANMELDUNG**

(43) Veröffentlichungstag:
**15.10.2003 Patentblatt 2003/42**

(51) Int Cl.[7]: **G01J 4/04**

(21) Anmeldenummer: **02008021.4**

(22) Anmeldetag: **10.04.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **Tektronix Munich GmbH**
**85757 Karlsfeld (DE)**

(72) Erfinder:
- **Krause, Egbert**
  **09217 Burgstädt (DE)**
- **Bandemer, Adalbert**
  **85221 Dachau (DE)**

(74) Vertreter: **Schurack, Eduard F. et al**
**Hofstetter, Schurack & Skora**
**Balanstrasse 57**
**81541 München (DE)**

(54) **Verfahren und Vorrichtung zur hochgenauen Kalibrierung von Polarimetern**

(57) Die Erfindung betrifft ein Verfahren und eine Vorrichtung zur relativen und absoluten Kalibrierung eines vollständigen Polarimeters unter Verwendung einer begrenzten Anzahl von unabhängigen und ungenau bekannten Eingangspolarisationen, wobei einzig der Polarisationsgrad aller Eingangspolarisationen gleich sein muß. Zusätzlich kann die Referenzebene der Polarisationsmessung an jede beliebige Stelle auch außerhalb des Polarimeters transformiert werden.

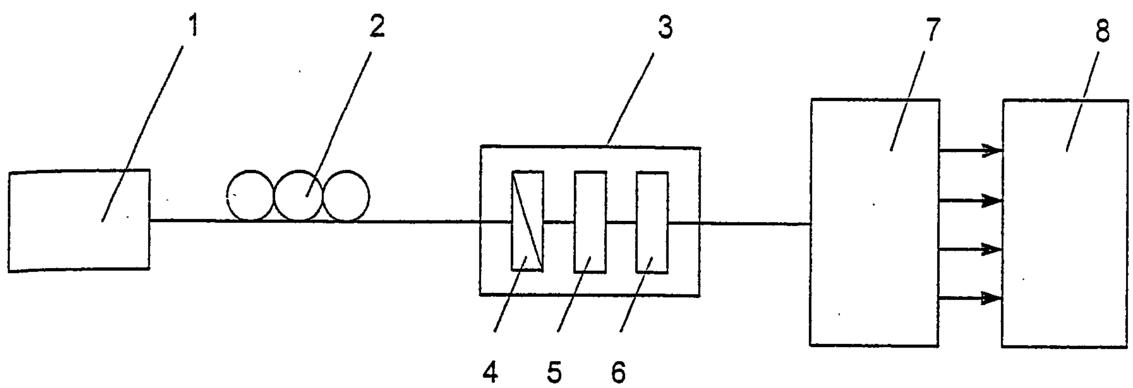


Fig. 1

EP 1 353 157 A1

## Beschreibung

### Technisches Gebiet

Die Erfindung betrifft ein Verfahren zur Kalibrierung von vollständigen Polarimetern gemäß dem Oberbegriff des Anspruchs 1 sowie eine korrespondierende Vorrichtung.

Kommerzielle Polarimeter arbeiten entweder mit nur einem Detektor und rotierender Wellenplatte oder basieren auf Mehrdetektor-Anordnung mit vier (oder mehr) Detektoren. Vollständige Polarimeter sind Polarimeter, die alle vier Stokes-Parameter erfassen. Das erfindungsgemäße Verfahren und die erfindungsgemäßen Kalibriervorrichtungen können bei Mehrdetektor-Pölarimeter-Anordnungen eingesetzt werden. Bei diesen Polarimetern wird die einfallende Lichtleistung in mindestens vier separate Leistungsanteile zerlegt. Mindestens drei der vier Leistungsanteile passieren polarisierende Elemente und werden so polarisationsabhängig. Ein oder mehrere doppelbrechende Elemente, die vor den polarisierenden Elementen angeordnet sind, sorgen dafür, dass die Maxima der vier Detektorströme bei verschiedenen Eingangspolarisationen auftreten.

Die Kalibriermatrix B des Polarimeters gibt den eindeutigen Zusammenhang zwischen den vier Detektorströmen $I_0...I_3$ und den vier Stokes-Parametern $S_0...S_3$ an.

$$S = B * I \quad ; \quad \begin{bmatrix} S_0 \\ S_1 \\ S_2 \\ S_3 \end{bmatrix} = \begin{bmatrix} b_{00} & b_{01} & b_{02} & b_{03} \\ b_{10} & b_{11} & b_{12} & b_{13} \\ b_{20} & b_{21} & b_{22} & b_{23} \\ b_{30} & b_{31} & b_{32} & b_{33} \end{bmatrix} * \begin{bmatrix} I_0 \\ I_1 \\ I_2 \\ I_3 \end{bmatrix}$$

Aufgabe der Erfindung ist es, ein Verfahren bereitzustellen, wodurch die Matrix B sehr genau bestimmt werden kann.

Ein 4-Detektor-Polarimeter gestattet es, aus vier gemessenen Detektorströmen die Parameter

- Zustand der Polarisation (SOP = State of Polarization)
- Polarisationsgrad (DOP = Degree of Polarization) und
- Leistung des Lichtes zu messen.

Diese Parameter sind aus den vier Stokes-Parametern $S_0$, $S_1$, $S_2$ und $S_3$ ableitbar. $S_0$ ist die Gesamtleistung, $S_1$, $S_2$ und $S_3$ werden üblicherweise auf die Gesamtleistung $S_0$ normiert, so dass die normierten Stokes-Parameter $s_1$,$s_2$ und $s_3$ den Polarisationszustand angeben.

Der Polarisationsgrad kennzeichnet das Verhältnis von polarisierter Leistung zur Gesamtleistung und wird durch die Formel

$$DOP = \frac{\sqrt{S_1^2 + S_2^2 + S_3^2}}{S_0}$$

beschrieben. Eine vollständige Beschreibung der Polarisationseigenschaften des Lichtes erfolgt mathematisch mit Hilfe des Stokes-Vektors.

Der Stokes-Vektor ist durch die vier Stokes-Parameter $S_0$ ... $S_3$ vollständig bestimmt, diese sind wie folgt definiert: $S_0$ ist die Gesamtleistung, $S_1$ ist der linear horizontal minus dem linear vertikal polarisierten Anteil, $S_2$ ist der linear 45° minus dem linear -45° polarisierten Anteil, $S_3$ ist der zirkular rechtsdrehende minus dem zirkular linksdrehend polarisierten Anteil.

Eine Wellenplatte besitzt einen richtungsabhängigen Brechungsindex. Damit erfahren die im allgemeinen linearen Teilwellen unterschiedliche Phasengeschwindigkeiten und erlangen eine Phasendifferenz, wodurch sich der Polarisationszustand ändert.

Ein Polarisator dämpft die Teilwelle in seiner Sperrrichtung stärker als die orthogonale Komponente in Durchlaßrichtung. Damit wird die transmittierte Lichtleistung polarisationsabhängig und eine einfache Detektion der Polarisation wird ermöglicht.

Polarimeter werden z.B. bei folgenden Anwendungen eingesetzt:

- Bestimmung der Polarisation, der Leistung und des Polarisationsgrades (DOP)
- Bestimmung des Polarisationsgrades (DOP) als Regelsignal für eine PMD-Kompensation
- Bestimmung der polarisationsabhängigen Dämpfung (PDL) von optischen Fasern und optischen Komponenten
- Bestimmung der Polarisations-Moden-Dispersion (PMD) von optischen Fasern und optischen Komponenten
- Analyse von doppelbrechenden und polarisierenden Materialien
- Bestimmung des Auslöschverhältnisses (Extinktion Ratio, ER) bei polarisationserhaltenden Fasern (PMF)
- Auswertung von Sensoren auf polarimetrischer Basis (z.B. Faraday-Stromsensor)
- Gewinnung von Regelsignalen in automatischen Polarisationsstellern
- u.v.m.

Neben vollständigen Polarimetern, die alle vier Stokes-Parameter erfassen, gibt es Einrichtungen, die z.B. nur die Abweichung der Polarisation von einem festgelegten Sollzustand bestimmen. Dieser Aufgabe werden bereits einfache Polarisatoren, Polarisationsstrahlteiler usw. gerecht.

## Stand der Technik

Zur Kalibrierung eines Polarimeters werden üblicherweise bekannte Polarisationszustände und Lichtleistungen in das Polarimeter eingespeist und die dazugehörigen Detektorsignale gemessen. Aus den bekannten Polarisationszuständen und den dazugehörigen Detektorsignalen wird die Übertragungsfunktion (Kalibriermatrix) berechnet. Die optischen Eingangssignale müssen üblicherweise mit hoher Genauigkeit bekannt sein.

In [R.M.A. Azzam et al: "Construction, calibration and testing of a four-detector photopolarimeter", Review of Scientific Instruments, vol. 59, No. 1, Jan., 1988, New York, U.S, pp. 84-88] ist die Vorgehensweise der üblichen "Four Point Calibration" beschrieben.

Zur Kalibrierung des Polarimeters werden vier Polarisationen mit bekannten Stokes-Parametern $S_{i,j}$ verwendet. Die Laufvariable i beschreibt den entsprechenden Stokes-Parameter des Polarisationszustandes j. Die vier Stokes-Vektoren werden in den Spalten der Matrix S abgelegt.

$$S = \begin{bmatrix} S_{0,0} & S_{0,1} & S_{0,2} & S_{0,3} \\ S_{1,0} & S_{1,1} & S_{1,2} & S_{1,3} \\ S_{2,0} & S_{2,1} & S_{2,2} & S_{2,3} \\ S_{3,0} & S_{3,1} & S_{3,2} & S_{3,3} \end{bmatrix}$$

Zu jeder der vier bekannten Eingangspolarisationen werden die vier Detektorströme gemessen und in die Spalten der Matrix I eingetragen.

$$I = \begin{bmatrix} I_{0,0} & I_{0,1} & I_{0,2} & I_{0,3} \\ I_{1,0} & I_{1,1} & I_{1,2} & I_{1,3} \\ I_{2,0} & I_{2,1} & I_{2,2} & I_{2,3} \\ I_{3,0} & I_{3,1} & I_{3,2} & I_{3,3} \end{bmatrix}$$

Die Instrumentenmatrix A ergibt sich zu:

$$A = I * S^{-1} \quad ; \quad \begin{bmatrix} I_{0,0} & I_{0,1} & I_{0,2} & I_{0,3} \\ I_{1,0} & I_{1,1} & I_{1,2} & I_{1,3} \\ I_{2,0} & I_{2,1} & I_{2,2} & I_{2,3} \\ I_{3,0} & I_{3,1} & I_{3,2} & I_{3,3} \end{bmatrix} * \begin{bmatrix} S_{0,0} & S_{0,1} & S_{0,2} & S_{0,3} \\ S_{1,0} & S_{1,1} & S_{1,2} & S_{1,3} \\ S_{2,0} & S_{2,1} & S_{2,2} & S_{2,3} \\ S_{3,0} & S_{3,1} & S_{3,2} & S_{3,3} \end{bmatrix}^{-1}$$

Im allgemeinen werden die Polarisationszustände linear-horizontal (H), linear-45° (45°), zirkular-rechts (R) und linear-vertikal (V) verwendet. Damit folgt für die Matrix S:

$$S = \begin{bmatrix} 1 & 1 & 1 & 1 \\ 1 & 0 & 0 & -1 \\ 0 & 1 & 0 & 0 \\ 0 & 0 & 1 & 0 \end{bmatrix}$$

Allgemein kann die Kalibrierung aber bei beliebigen vier Polarisationen, die nicht auf einer Ebene liegen, durchgeführt werden. Zusätzlich wird gefordert, dass die Leistung konstant und der DOP =1 (DOP = 100%) ist. Nach einer Normierung auf die konstante Leistung gilt dann für diese vier Stokes-Vektoren:

$$S_0^2 = S_1^2 + S_2^2 + S_3^2$$

$$S = \begin{bmatrix} 1 & 1 & 1 & 1 \\ S_{1,0} & S_{1,1} & S_{1,2} & S_{1,3} \\ S_{2,0} & S_{2,1} & S_{2,2} & S_{2,3} \\ S_{3,0} & S_{3,1} & S_{3,2} & S_{3,3} \end{bmatrix}$$

$$S_{1,0}^2 + S_{2,0}^2 + S_{3,0}^2 = 1$$

$$S_{1,1}^2 + S_{2,1}^2 + S_{3,1}^2 = 1$$

$$S_{1,2}^2 + S_{2,2}^2 + S_{3,2}^2 = 1$$

$$S_{1,3}^2 + S_{2,3}^2 + S_{3,3}^2 = 1$$

Die Instrumentenmatrix wird berechnet mit:

$$A = I * S^{-1} \quad ; \quad \begin{bmatrix} I_{0,0} & I_{0,1} & I_{0,2} & I_{0,3} \\ I_{1,0} & I_{1,1} & I_{1,2} & I_{1,3} \\ I_{2,0} & I_{2,1} & I_{2,2} & I_{2,3} \\ I_{3,0} & I_{3,1} & I_{3,2} & I_{3,3} \end{bmatrix} * \begin{bmatrix} S_{0,0} & S_{0,1} & S_{0,2} & S_{0,3} \\ S_{1,0} & S_{1,1} & S_{1,2} & S_{1,3} \\ S_{2,0} & S_{2,1} & S_{2,2} & S_{2,3} \\ S_{3,0} & S_{3,1} & S_{3,2} & S_{3,3} \end{bmatrix}^{-1}$$

anschließend invertiert

$$B = A^{-1} \quad ; \quad \begin{bmatrix} b_{00} & b_{01} & b_{02} & b_{03} \\ b_{10} & b_{11} & b_{12} & b_{13} \\ b_{20} & b_{21} & b_{22} & b_{23} \\ b_{30} & b_{31} & b_{32} & b_{33} \end{bmatrix} = \begin{bmatrix} a_{00} & a_{01} & a_{02} & a_{03} \\ a_{10} & a_{11} & a_{12} & a_{13} \\ a_{20} & a_{21} & a_{22} & a_{23} \\ a_{30} & a_{31} & a_{32} & a_{33} \end{bmatrix}^{-1}$$

Das so abgeglichene Polarimeter befriedigt die Beziehung:

$$S = B * I \quad ; \quad \begin{bmatrix} S_0 \\ S_1 \\ S_2 \\ S_3 \end{bmatrix} = \begin{bmatrix} b_{00} & b_{01} & b_{02} & b_{03} \\ b_{10} & b_{11} & b_{12} & b_{13} \\ b_{20} & b_{21} & b_{22} & b_{23} \\ b_{30} & b_{31} & b_{32} & b_{33} \end{bmatrix} * \begin{bmatrix} I_0 \\ I_1 \\ I_2 \\ I_3 \end{bmatrix}$$

Ein solcher Abgleich gewährleistet allerdings nicht, dass für jede beliebig andere Eingangspolarisation mit einem DOP von 100% ( DOP = 1) auch dieser Wert ermittelt wird, weil die Polarisationen und die Detektorsignale fehlerbehaftet sind.

In [B. Heffner, US 5,296,913] wird ein Verfahren vorgestellt, das mit Hilfe von wenigstens drei verschiedenen Polarisationen gleichen Polarisationsgrades die bestehende Kalibrierung eines Polarimeters verbessern kann. Die Verbesserung besteht in der Hinzufügung einer Korrekturmatrix [C].

$$[S]=[B]*[C]*[I]$$

$$\begin{bmatrix} S_0 \\ S_1 \\ S_2 \\ S_3 \end{bmatrix} = \begin{bmatrix} b_{00} & b_{01} & b_{02} & b_{03} \\ b_{10} & b_{11} & b_{12} & b_{13} \\ b_{20} & b_{21} & b_{22} & b_{23} \\ b_{30} & b_{31} & b_{32} & b_{33} \end{bmatrix} * \begin{bmatrix} c_0 & 0 & 0 & 0 \\ 0 & c_1 & 0 & 0 \\ 0 & 0 & c_2 & 0 \\ 0 & 0 & 0 & c_3 \end{bmatrix} * \begin{bmatrix} I_0 \\ I_1 \\ I_2 \\ I_3 \end{bmatrix}$$

Die Korrekturmatrix [C] hat die Form einer Diagonalmatrix mit den Elementen $c_0 ... c_3$, das Element $c_0$ wird gleich 1 gesetzt. Die Korrektur besteht also in der Hinzufügung von Gewichtungsfaktoren $c_1$, $c_2$ und $c_3$ zu den Detektorströmen $I_1$,$I_2$ und $I_3$.

$$\begin{bmatrix} S_0 \\ S_1 \\ S_2 \\ S_3 \end{bmatrix} = \begin{bmatrix} b_{00} & b_{01} & b_{02} & b_{03} \\ b_{10} & b_{11} & b_{12} & b_{13} \\ b_{20} & b_{21} & b_{22} & b_{23} \\ b_{30} & b_{31} & b_{32} & b_{33} \end{bmatrix} * \begin{bmatrix} I_0 \\ c_1 * I_1 \\ c_2 * I_2 \\ c_3 * I_3 \end{bmatrix}$$

Mit diesem Verfahren gelingt es, die Genauigkeit eines bereits kalibrierten Polarimeters zu verbessern.

Nach [Noé, R., DE 100 23 708 A 1] wird die Instrumentenmatrix eines Polarimeters gefunden, indem sehr viele, gleichverteilte Polarisationszustände für die Kalibrierung verwendet werden. Die Kalibrierung beruht auf der Korrelation von sehr vielen gleichverteilten Polarisationen, für die eine Korrelationsmatrix bekannt ist.

## Nachteile der bisher bekannten Kalibriermethoden

Die Kalibriermethode nach [Assam, siehe Zitat vorher] benötigt exakt bekannte Eingangspo. larisationen. Diese werden von einem deterministischen Polarisationssteller, z.B. bestehend aus einem drehbaren Polarisator sowie einer drehbaren λ/4 und einer drehbaren λ/2 Wellen platte, erzeugt. Die Genauigkeit wird dabei von mechanischen Fehlern der Drehvorrichtungen, von nicht perfekten optischen Elementen und von möglichen Fehlern der optischen Kopplung zwischen SOP-Generator und Polarimeter begrenzt. Ein besonderes Problem ist die genaue Bestimmung der Verzögerung der eingesetzten Wellenplatten.

Das Polarimeter erfaßt die vier Detektorsignale bei den vorgegebenen Kalibrier-Polarisationszuständen. Mit diesen Werten wird die Kalibriermatix bestimmt und das Polarimeter erfüllt damit bei genau diesen Werten eindeutig die Vorgaben für SOP, DOP und Leistung.

Gewöhnlich zeigt das Polarimeter aber bei allen anderen Polarisationen Meßfehler, die am deutlichsten in einem abweichenden Polarisationsgrad sichtbar werden. Ursache dafür ist, dass die vier Kalibrier-Polarisationszustände nicht genügend genau gekannt waren und die Detektorsignale nicht präzise genug gemessen wurden.

Die Methode für ein geeichtes Nachkalibrieren eines Polarimeters nach [Heffner] verwendet den Ansatz, wonach das kalibrierte Polarimeter bei allen angelegten Polarisationen mit DOP=1 auch DOP=1 anzeigen muß. Die Grenzen dieses Verfahrens liegen in der Einfachheit der Korrekturwerte. Die drei Faktoren $c_1$,$c_2$ und $c_3$ können zwar den Betrag der Detektorströme korrigieren, nicht aber die Richtung der Polarisationen, bei denen die Detektorströme $I_1$,$I_2$ und $I_3$ ihr Maximum bzw. Minimum erreichen.

Polarimeter bei denen die Polarisationen, die zu einem maximalen Detektorstrom führen, von den Polarisationen der Grundkalibrierung abweichen, können auf diese Weise nur sehr unvollkommen korrigiert werden. Einflüsse von Polarisatoren, deren Transmissionsrichtung instabil ist, oder Wellenplatten, deren Verzögerung wellenlängenabhängig ist, können auf diese Weise nicht korrigiert werden.

Das Verfahren nach [Noé] erfordert die Generierung einer sehr großen Anzahl definierter Polarisationszustände. Die dazu notwendigen Einrichtungen sind aufwendig. Nachteilig ist auch die sehr lange Meßzeit, die für sehr viele Polarisationsmessungen (Größenordnung 200.000) benötigt wird.

## Darstellung der Erfindung

Ein Polarimeter, welches mit Hilfe von festen Polarisations-Normalen kalibriert wurde, zeigt immer Meßfehler, weil die Polarisationen, die zur Kalibrierung verwendet werden, fehlerhaft waren. Die Fehler des Polarimeters zeigen sich am deutlichsten in der Anzeige des Polarisationsgrades DOP. Ordnet man vor das zu überprüfende Polarimeter einen idealen Polarisationstransformator an, der zwar den Polaristionszustand, nicht aber den Polarisationsgrad ändert, so ist die Variation des angezeigten Polarisationsgrades ein Maß für die Güte der Kalibrierung des Polarimeters.

Ziel der Erfindung ist es, ein Verfahren anzugeben, mit dem eine Korrekturmatrix für ein Polarimeter ermittelt werden kann, die weitreichende Verbesserungen der Kalibrierung eines Polarimeters ermöglicht.

Dazu werden neben den mindestens vier Polarisationszuständen, bei denen die Grundkalibrierung erfolgt, weitere Hilfspolarisationszustände bereitgestellt. Diese Hilfs-Polarisationen sollten möglichst gleichmäßig über die Poincaré-Kugel verteilt sein. Neben den vier Polarisationen, die zu einer Standard-Kalibrierung benötigt werden (beispielsweise H, 45°, V und R) werden vorteilhafterweise zum Beispiel noch L und -45° sowie acht weitere elliptische Polarisationen eingeführt: (Azimuth/Elliptizität) = (22.5°/±17.6°) (67.5°/±17.6°) (-67.5°/±17.6°) (-22.5°/±17.6°).

Die Detektorsignale werden damit für die sechs oberen Grenzwerte der Stokes-Parameter ($s_1 = \pm1$, $s_2 = \pm1$ und $s_3 = \pm1$), sowie an den acht elliptischen Polarisationen in der Mitte aller Kugel-Segmente, die durch die Ebenen $s_1 = 0$, $s_2 = 0$ und $s_3 = 0$ gebildet werden, bestimmt.

Insgesamt stehen also 14 Strom-Vektoren ($I_{0,i}$, $I_{1,i}$, $I_{2,i}$, $I_{3,i}$) zur Verfügung (der Index i kennzeichnet die Polarisation), für die nach einer exakten Kalibrierung gelten muß: Die berechnete Leistung ist konstant und der berechnete Polarisationsgrad DOP ist 100%.

| Polarisations-zustand | Azimuth θ (Grad) | Elliptizität ε (Grad) | $s_1=S_1/S_0$ | $s_2=S_2/S_0$ | $S_3=S_3/S_0$ |
|---|---|---|---|---|---|
| H | 0 | 0 | 1 | 0 | 0 |
| 45° | 45 | 0 | 0 | 1 | 0 |
| V | 90 | 0 | -1 | 0 | 0 |
| R | - | 45 | 0 | 0 | 1 |
| L | - | -45 | 0 | 0 | -1 |
| -45° | -45 | 0 | 0 | -1 | 0 |
| 22.5° R | 22.5 | 17.63 | $\frac{1}{\sqrt{3}}$ | $\frac{1}{\sqrt{3}}$ | $\frac{1}{\sqrt{3}}$ |
| 22.5° L | 22.5 | -17.63 | $\frac{1}{\sqrt{3}}$ | $\frac{1}{\sqrt{3}}$ | $-\frac{1}{\sqrt{3}}$ |
| 67.5° R | 67.5 | 17.63 | $-\frac{1}{\sqrt{3}}$ | $\frac{1}{\sqrt{3}}$ | $\frac{1}{\sqrt{3}}$ |
| 67.5° L | 67.5 | -17.63 | $-\frac{1}{\sqrt{3}}$ | $\frac{1}{\sqrt{3}}$ | $-\frac{1}{\sqrt{3}}$ |
| -67.5° R | -67.5 | 17.63 | $-\frac{1}{\sqrt{3}}$ | $-\frac{1}{\sqrt{3}}$ | $\frac{1}{\sqrt{3}}$ |
| -67.5° L | -67.5 | -17.63 | $-\frac{1}{\sqrt{3}}$ | $-\frac{1}{\sqrt{3}}$ | $-\frac{1}{\sqrt{3}}$ |
| -22.5° R | -22.5 | 17.63 | $\frac{1}{\sqrt{3}}$ | $-\frac{1}{\sqrt{3}}$ | $\frac{1}{\sqrt{3}}$ |
| -22.5° L | -22.5 | -17.63 | $\frac{1}{\sqrt{3}}$ | $-\frac{1}{\sqrt{3}}$ | $-\frac{1}{\sqrt{3}}$ |

Figur 5 zeigt die Kalibrierpunkte (H, 45°, V, R) mit schwarzen Punkten und die zehn weiteren Polarisationszustände mit grauen Punkten.

Die Beschränkung auf die hier genannten Polarisationszustände ist nicht zwingend. Ebenso können andere, beliebige Polarisationen als Hilfs-Polarisationen verwendet werden. Es kommt nicht auf deren exakte Lage an, sondern nur darauf, dass alle Bereiche der Poincaré-Kugel möglichst überdeckt sind.

Die erfindungsgemäße Kalibriermethode geht von der "Four Point Calibration" nach [Azzam] aus, berücksichtigt aber, dass die vier Kalibrier-Polarisationszustände fehlerhaft, also nicht exakt bekannt sind. Es werden daher Korrektur-Parameter vorgesehen, um die Mess- und Einstellfehler der zur Kalibrierung verwendeten Polarisationszustände zu berücksichtigen.

Erfindungsgemäß werden in einem iterativen Verfahren die Korrektur-Parameter ermittelt. Damit sind automatisch auch die vier Polarisationszustände, die beim ersten Schritt der Kalibrierung, also der Kalibrierung gemäß dem Stand der Technik vorgelegen haben, genauer bekannt.

Das erfindungsgemäß vorgeschlagene Kalibrierverfahren hat das Ziel, den berechneten Polarisationsgrad

bei allen aufgenommenen Polarisationszuständen auf einen gemeinsamen Wert des Polarisationsgrades von 100% (DOP = 1) zu bringen. Die korrekte Kalibrierung ist dann erreicht, wenn das Polarimeter für beliebige Eingangspolarisationen, die 100% polarisiert an den Eingang des Polarimeters angelegt werden, immer einen Polarisationsgrad von DOP=1 anzeigt. Der Fehler bei der Anzeige des Polarisationsgrades eines Polarimeters ist immer ein Maß der Güte der Kalibrierung des Polarimeters.

Als Optimierungskriterium wird erfindungsgemäß eingeführt:

$$DOP_{diff} = \frac{1}{n}\sqrt{\sum_{i=1}^{n}(DOP_i - 1)^2}$$

$DOP_{diff}$ ist der mittlere quadratische Fehler, den alle im oben angegebenen Fall von vierzehn Strom-Vektoren mit der jeweils aktuellen Kalibriermatrix liefern. Für ein ideales Polarimeter gilt $DOP_{diff}$ = 0. Der Laufindex i kann erst bei i=5 starten, denn die vier Kalibrier-Polarisationen gemäß Standard-Kalibrierung (bei H, 45°, V und R) liefern immer DOP=1, da dies eine Vorgabe bei der Ermittlung der Instrumentenmatrix war.

Durch eine iterative mathematische Änderung von drei der vier Kalibrierzustände wird fortlaufend der Polarisationsgrades DOP bei den weiteren Hilfspolarisationszuständen berechnet und so eine Optimierung auf das Kriterium $DOP_{diff}$ = 0 herbeigeführt.

**Ausführungsformen von Kalibrieranordnungen zur Durchführung des erfindungsgemäßen Verfahrens**

Figur 1 zeigt die Anordnung zur Kalibrierung eines Polarimeters. Die Polarisation eines Lasers (1) wird durch einen deterministischen Polarisationssteller (3) bestehend aus drehbarem Polarisator (4), drehbarem λ/4 Wellenplatte (5) und drehbarem λ/2 Wellenplatte (6) in der Polarisation einstellbar. Der davor angeordnete manuelle Polarisationssteller (2) hat die Aufgabe, die Polarisation vor dem Polarisator (4) so einzustellen, dass minimale Dämpfung auftritt.

Der Polarisator (4) garantiert einen Polarisationsgrad von DOP=1 (100%). Der Einstellwinkel der λ/4 Wellenplatte (5) beeinflusst die Elliptizität und der Einstellwinkel der λ/2 Wellenplatte (6) beeinflusst den Azimuth der Polarisation am Ausgang des deterministischen Polarisationssteller (3). Da die Polarisationsparameter deterministisch einstellbar sind, ist damit eine absolute Kalibrierung möglich. Die Kalibrierung bezieht sich auf das Koordinatensystem des Polarisationsstellers (3).

Die so erzeugten Polarisationen mit DOP=1 gelangen an den Eingang des zu kalibrierenden Polarimeters (7) mit der Auswerte- und Anzeigeeinheit (8).

Mit einer Anordnung nach Figur 2 kann ein Polarimeter mit einem Vergleichs-Polarimeter kalibriert werden. Das Licht des Lasers wird im Polarisator (4) zu 100% polarisiert. Der davor angeordnete manuelle Polarisationssteller (2) sorgt für minimale Dämpfung durch den Polarisator (4).

Mit Hilfe des 2. manuellen Polarisationsstellers (9) können alle möglichen Polarisarionszustände unter Beibehaltung des Polarisationsgrades von DOP=1 erzeugt werden. Ein Koppler (10) teilt die optische Leistung in zwei Anteile auf, einer wird dem zu kalibrierenden Polarimeter (7) und einer dem Vergleichs-Polarimeter (11) zur Verfügung gestellt.

Eine absolute Kalibrierung kann nur auf die Bezugsebene des Vergleichs-Polarimeters (11) erreicht werden. Falls es sich bei dem Koppler (10) um eine faseroptische Einrichtung handelt, ist eine absolute Kalibrierung erreichbar, wenn die am Aufbau beteiligten Fasern keiner Bewegung ausgesetzt sind. Falls die Faser doch bewegt wurde, bewirkt jede Änderung der Eingangspolarisation sowohl im zu kalibrierenden, als auch im Vergleichspolarimeter die gleichen Änderungen der Anzeige, nicht allerdings die Anzeige des gleichen Absolutwertes.

Mit einer Anordnung nach Fig. 3 erfolgt die Kalibrierung ohne die Berücksichtigung des äußeren Bezugssystems. Es wird eine genaue relative Kalibrierung erreicht.

Mit einer Anordnung nach Figur 4 kann auch ein Inline-Faser-Polarimeters (12) kalibriert werden. An den Ausgang des Inline-Faser-Polarimeters kann direkt ein Vergleichs-Polarimeter (11) angeschlossen werden. Die Kalbrierung erfolgt hier auf das Bezugssystem des Vergleichs-Polarimeters.

In Figur 5 ist beispielhaft die Lage der 4 Kalibrier-Polarisationen (H, 45°, V und R) (schwarz) und die Verteilung von 10 weiteren Hilfs-Polarisationen (grau) auf der Poincaré-Kugel dargestellt.

**Darstellung des Verfahrens an Ausführungsbeispielen**

In dem ersten Ausführungsbeispiel werden zur Kalibrierung beispielhaft die Eingangspolarisationen H, 45°, V und R verwendet. Dabei wird angenommen, daß die Polarisation H exakt vorliegt und die Polarisation 45° tatsächlich

linear ist. Diese Definition erlaubt alle nötigen Freiheitsgrade für die Verschiebung der Kalibrier-Polarisationen. Trotzdem geht der Bezug zu den absolut vorgebebenen Polarisationen nicht verloren.

Im Ergebnis der iterativen Verschiebung erhält man die Instrumentenmatrix A und deren inverse Matrix B eines sehr genau kalibrierten Polarimeters, welches nur Abweichungen zu den.vorgegebenen Kalibrier-Polarisationen 45°, V und R zeigt. Die Polarisation H und die Linearität der Polarisation 45° bleiben unberührt, d.h. das Polarimeter misst exakt die Vorgabewerte.

Die Standard-Kalibrierung nach [Azzam] geht von drei linearen Polarisationen (H, 45°, V) und einer zirkularen Polarisation (R) aus:

$$S = \begin{bmatrix} 1 & 1 & 1 & 1 \\ 1 & 0 & -1 & 0 \\ 0 & 1 & 0 & 0 \\ 0 & 0 & 0 & 1 \end{bmatrix}$$

Die Reihenfolge in den Spalten wurde gewählt zu (H, 45°, V, R). Es wird vorausgesetzt, dass die vier Kalibrierpolarisationen mit einer konstanten Leistung vorliegen. Ohne Einschränkung der Allgemeinheit wird die Gesamtleistung zu $S_0$=1 normiert.

Außerdem gilt für jeden Stokes-Vektor:

$$S_0^2 = S_1^2 + S_2^2 + S_3^2$$

was gleichbedeutend mit der Aussage DOP=1 (DOP=1) ist.

Ein monochromatischer Laser liefert nahezu DOP=1, ein nachgeschalteter Polarisator mit einem hohen Extinktionsverhältnis (60 dB) führt sicher zu einem DOP=1. Ein Polarisationssteller, der eine polarisationsabhängige Dämpfung aufweist, kann dadurch korrigiert werden, dass die Leistung an seinem Ausgang mit einem Leistungsmesser überwacht wird.

Der Fehler bei der Kalibrierung besteht darin, nicht genau zu wissen (oder messen zu können) welche vier Polarisationen vorliegen. Diese Unsicherheit kann nachträglich eliminiert werden. Es wird schrittweise nach den vier Polarisationen gesucht, die tatsächlich bei der Kalibrierung vorhanden sind, also allgemein:

$$S = \begin{bmatrix} 1 & 1 & 1 & 1 \\ S_{1,0} & S_{1,1} & S_{1,2} & S_{1,3} \\ S_{2,0} & S_{2,1} & S_{2,2} & S_{2,3} \\ S_{3,0} & S_{3,1} & S_{3,2} & S_{3,3} \end{bmatrix}$$

wobei der zweite Index kennzeichnet den Index der Kalibrier-Polarisation (0...3).

Gestartet wird die schrittweise Verbesserung mit dem "Verschieben" einer Polarisation. Die Leistung bleibt konstant 1 der DOP bleibt unverändert bei 100%. Die Kalibrier-Polarisation H wird als exakt angenommen, sie wird nicht verändert.

$$\begin{bmatrix} S_{0,0} \\ S_{1,0} \\ S_{2,0} \\ S_{3,0} \end{bmatrix} = \begin{bmatrix} 1 \\ 1 \\ 0 \\ 0 \end{bmatrix}$$

Die Kalibrier-Polarisation 45° wird als linear vorausgesetzt. Der Azimuth-Winkel könnte jedoch schon fehlerhaft sein und wird daher korrigiert:

$$\begin{bmatrix} S_{0,1} \\ S_{1,1} \\ S_{2,1} \\ S_{3,1} \end{bmatrix} = \begin{bmatrix} 1 \\ k_0 \\ \sqrt{1-k_0^2} \\ 0 \end{bmatrix}$$

Dabei ist $k_0$ eine Korrekturgröße, die eine geringfügige Abweichung im Azimuth-Winkel zu lässt. Die Bedingung DOP=1 (DOP=1) bleibt jedoch für alle $k_0$ gewahrt.

Die Kalibrier-Polarisation V kann Abweichungen im Azimuth und eine Elliptizität ungleich 0 aufweisen und wird beschrieben mit:

$$\begin{bmatrix} S_{0,2} \\ S_{1,2} \\ S_{2,2} \\ S_{3,2} \end{bmatrix} = \begin{bmatrix} 1 \\ \sqrt{1-k_1^2-k_2^2} \\ k_1 \\ k_2 \end{bmatrix}$$

Die Kalibrier-Polarisation R kann Abweichungen von ihrem idealen Elliptizitätswinkel 45° aufweisen und der Azimuthwinkel wird frei wählbar.

$$\begin{bmatrix} S_{0,3} \\ S_{1,3} \\ S_{2,3} \\ S_{3,3} \end{bmatrix} = \begin{bmatrix} 1 \\ k_3 \\ k_4 \\ \sqrt{1-k_3^2-k_4^2} \end{bmatrix}$$

Die komplette S-Matrix ist demzufolge:

$$S = \begin{bmatrix} 1 & 1 & 1 & 1 \\ 1 & k_0 & -\sqrt{1-k_1^2-k_2^2} & k_3 \\ 0 & \sqrt{1-k_0^2} & k_1 & k_4 \\ 0 & 0 & k_2 & \sqrt{1-k_3^2-k_4^2} \end{bmatrix}$$

Mit den 5 Korrektur-Parametern $k_0$ bis $k_4$ erhält man 5 Freiheitsgrade, bei deren Manipulation sich die Präzision der Polarimeters verbessern lässt.

Die Kalibrierung wird durchgeführt, d.h. die Instrumentenmatrix wird berechnet mit:

$$A=I*S^{-1}$$

$$\begin{bmatrix} a_{00} & a_{01} & a_{02} & a_{03} \\ a_{10} & a_{11} & a_{12} & a_{13} \\ a_{20} & a_{21} & a_{22} & a_{23} \\ a_{30} & a_{31} & a_{32} & a_{33} \end{bmatrix} = \begin{bmatrix} I_{0,0} & I_{0,1} & I_{0,2} & I_{0,3} \\ I_{1,0} & I_{1,1} & I_{1,2} & I_{1,3} \\ I_{2,0} & I_{2,1} & I_{2,2} & I_{2,3} \\ I_{3,0} & I_{3,1} & I_{3,2} & I_{3,3} \end{bmatrix} * \begin{bmatrix} S_{0,0} & S_{0,1} & S_{0,2} & S_{0,3} \\ S_{1,0} & S_{1,1} & S_{1,2} & S_{1,3} \\ S_{2,0} & S_{2,1} & S_{2,2} & S_{2,3} \\ S_{3,0} & S_{3,1} & S_{3,2} & S_{3,3} \end{bmatrix}^{-1}$$

anschließend invertiert

$$B = A^{-1} \quad ; \quad \begin{bmatrix} b_{00} & b_{01} & b_{02} & b_{03} \\ b_{10} & b_{11} & b_{12} & b_{13} \\ b_{20} & b_{21} & b_{22} & b_{23} \\ b_{30} & b_{31} & b_{32} & b_{33} \end{bmatrix} = \begin{bmatrix} a_{00} & a_{01} & a_{02} & a_{03} \\ a_{10} & a_{11} & a_{12} & a_{13} \\ a_{20} & a_{21} & a_{22} & a_{23} \\ a_{30} & a_{31} & a_{32} & a_{33} \end{bmatrix}^{-1}$$

so dass folglich das kalibrierte Polarimeter die Stokes-Parameter, d.h. Polarisationen, DOP und Leistung aus dem Strom-Vektor ($I_0$, $I_1$, $I_2$, $I_3$) bestimmen kann.

$$S = B * I \quad ; \quad \begin{bmatrix} S_0 \\ S_1 \\ S_2 \\ S_3 \end{bmatrix} = \begin{bmatrix} b_{00} & b_{01} & b_{02} & b_{03} \\ b_{10} & b_{11} & b_{12} & b_{13} \\ b_{20} & b_{21} & b_{22} & b_{23} \\ b_{30} & b_{31} & b_{32} & b_{33} \end{bmatrix} * \begin{bmatrix} I_0 \\ I_1 \\ I_2 \\ I_3 \end{bmatrix}$$

Mit der erhaltenen Kalibriermatrix B wird der Polarisationsgrad $DOP_i$ für alle 14 Polarisationen berechnet.

$$DOP_i = \frac{\sqrt{S_{1,i}^2 + S_{2,i}^2 + S_{3,i}^2}}{S_{0,i}}$$

Damit wird die Abweichung aller Hilfs-Polarisationen vom idealen Wert DOP=1 ermittelt.

$$DOP_{diff} = \frac{1}{n}\sqrt{\sum_{i=1}^{n}(DOP_i - 1)^2}$$

Die Größe $DOP_{diff}$ gilt es, mittels Manipulation der Korrektur-Parameter $k_0$ bis $k_4$ zu minimieren. Nacheinander werden die Korrektur-Parameter $k_0$ bis $k_4$ nach einem Trial-and-Error-Verfahren manipuliert und jeweils das Gütekriterium $DOP_{diff}$ ermittelt. Mit der Änderung eines Korrektur-Parameters wird die damit verknüpfte Polarisation verschoben, P=1 und DOP=1 werden jedoch beibehalten.

Mit dem verschobenen Stokes-Vektor wird erneut eine Kalibrierrechnung durchgeführt. Abhängig vom Erfolg (wie hat sich $DOP_{diff}$ verändert) wird weiter verfahren. Hat sich $DOP_{diff}$ verkleinert so wird die Änderung des Korrektur-Parameters beibehalten und der nächste Verschiebung durchgeführt. Hat sich dagegen $DOP_{diff}$ vergrößert so wird die letzte Änderung verworfen und die Richtung der Verschiebung geändert. Wenn dies auch zu keiner Verbesserung führt, wird zum nächsten Korrektur-Parameter übergegangen.

Sind mit der anfangs gewählten Schrittweite keine weiteren Verbesserungen für die Korrektur-Parameter $k_0$ bis $k_4$ mehr möglich, dann wird die Schrittweite verkleinert, z.B. halbiert.

Das Ziel ist: $DOP_{diff} \rightarrow Min$

Als Resultat erhält man iterativ die tatsächlichen Polarisationszustände bei denen die Kalibrierpunkte (45°, V und R) aufgenommen wurden.

Die Voraussetzung, dass die Polarisation H fehlerfrei und die Polarisation 45° tatsächlich linear ist, muß nicht unbedingt zutreffen. Es können auch alle vier vorgegebenen Polarisationen fehlerhaft sein. Es können acht statt fünf Korrektur-Parameter vorgesehen werden. Die hinzugenommenen Freiheitsgrade sind nicht notwendig sondern vergrößert nur Aufwand und Rechenzeit der Kalibrierung.

Sollten auch die Polarisationen H und 45° fehlerhaft gewesen sein, so erhält das Polarimeter keine absolute Kalibrierung, sondern nur eine relative Kalibrierung. Dazu gehört auch die Konstanz des Polarisationsgrades über alle Polarisationszustände.

Beispielhaft kann der iterative Bestimmung der Korrektur-Parameter nach dem folgenden Schema ablaufen:

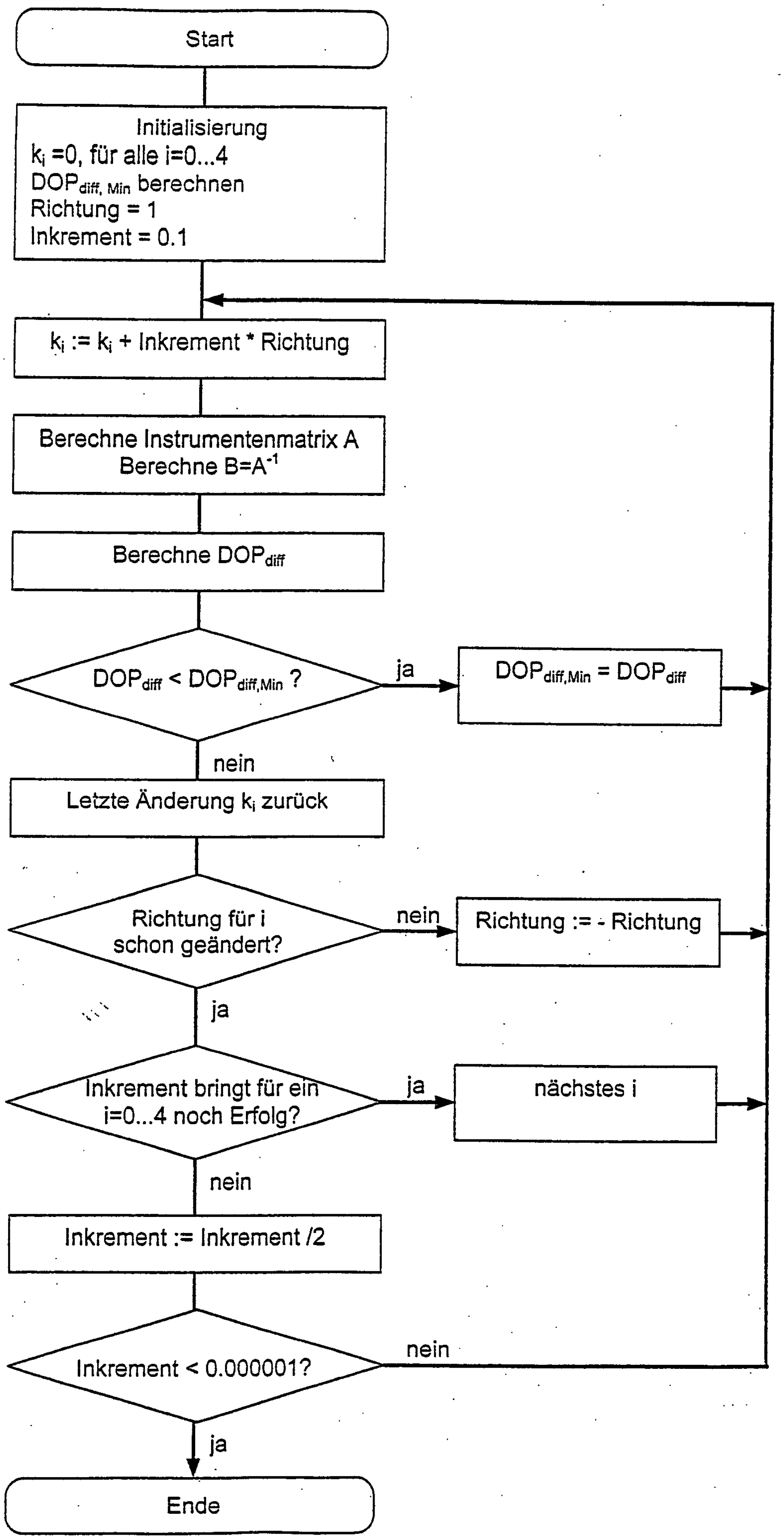
Start
Initialisierung
$k_i$ =0, für alle i=0...4
$DOP_{diff, Min}$ berechnen
Richtung = 1
Inkrement = 0.1
$k_i$ := $k_i$ + Inkrement * Richtung
Berechne Instrumentenmatrix A
Berechne $B=A^{-1}$
Berechne $DOP_{diff}$
$DOP_{diff}$ < $DOP_{diff,Min}$ ?
ja
$DOP_{diff,Min}$ = $DOP_{diff}$
nein
Letzte Änderung $k_i$ zurück
Richtung für i schon geändert?
nein
Richtung := - Richtung
ja
Inkrement bringt für ein i=0...4 noch Erfolg?
ja
nächstes i
nein
Inkrement := Inkrement /2
Inkrement < 0.000001?
nein
ja
Ende

In einem 2. Ausführungsbeispiel soll nun beschrieben werden, wie ein beliebiges 4-Detektor-Polarimeter mittels zufälligen Polarisationsvorgaben eine exakte relative Kalibrierung gemäß dem vorgeschlagenen Verfahren erhalten kann. Relativ bedeutet, dass die ermittelten Meßwerte Leistung und DOP stimmen, der absolute Polarisationszustand bis auf eine einfache Polarisationstransformation exakt bekannt ist. In einem abschließenden Schritt kann der Bezug zu einer absoluten Kalibrierebene recht einfach hergestellt werden.
Die Kalibrierung eines Polarimeters mittels einiger zufälliger Polarisationsproben beinhaltet folgende Schritte:

1. Schritt: Erzeugung und Speicherung von Polarisationszuständen

Es werden von einem Polarisationssteller (z.B. auch von einem Polarisations-Scrambler) nacheinander verschiedene Polarisationszustände erzeugt, die alle mit der normierten Leistung 1 und dem Polarisationsgrad DOP=1 (DOP = 1) vorliegen. Diese Polarisationszustände sind nahezu gleichverteilt über die Poincaré-Kugel. Eine brauchbare Anzahl an Polarisationen liegt bereits mit 10...50 unterschiedlichen Polarisationszuständen vor. Bei der Aufnahme der Polarisationsproben ist zu beachten, dass nicht große Bereiche der Poincaré-Kugel ausgespart werden, eine ungefähre Gleichverteilung ist anzustreben.

2. Schritt: Suche nach geeigneten Polarisationszuständen für die Kalibrierung

Aus der Fülle von Strom-Vektoren $[I_0, I_1, I_2, I_3]^T$, die bei den entsprechenden Stokes-Vektoren $[S_0, S_1, S_2, S_3]^T$ gemessen wurden, werden diejenige vier herausgesucht, die Polarisationszuständen entsprechen, die möglichst weit auf der Poincaré-Kugel auseinanderliegen. Dies kann dadurch erreicht werden, dass die Stromvektoren ausgesucht werden, bei denen jeweils ein maximaler Strom für $I_0$, $I_1$, $I_2$ bzw. $I_3$ gemessen wird. Die vier zugeordneten Polarisationen liegen damit relativ dicht an den Polarisationen, bei denen die Ströme $I_0$, $I_1$, $I_2$ und $I_3$ tatsächlich ihr Maximum erreichen. Bei einem gut bestimmten Polarimeter liegen diese vier Polarisationen auf der Poincaré-Kugel weit auseinander. Durch den konstruktiven Aufbau des Polarimeters ist außerdem näherungsweise bekannt, bei welchen vier Polarisationen diese Maxima auftreten.

3. Schritt: Näherungsweise Aufstellen einer ersten Instrumentenmatrix A

Das Polarimeter reagiert bei Anlegen eines Stokes-Vektors S mit einem Strom-Vektor I. Das Verhalten ist vollständig durch die Instrumentenmatrix A bestimmt.

$$I = A * S \quad ; \quad \begin{bmatrix} I_0 \\ I_1 \\ I_2 \\ I_3 \end{bmatrix} = \begin{bmatrix} a_{00} & a_{01} & a_{02} & a_{03} \\ a_{10} & a_{11} & a_{12} & a_{13} \\ a_{20} & a_{21} & a_{22} & a_{23} \\ a_{30} & a_{31} & a_{32} & a_{33} \end{bmatrix} * \begin{bmatrix} S_0 \\ S_1 \\ S_2 \\ S_3 \end{bmatrix}$$

Die Instrumentenmatrix A wird wie folgt gefunden:
Die vier angenommenen Stokes-Vektoren, bei denen die Maxima der Detektorströme auftreten, werden in den Spalten der Matrix S abgelegt. Dies kann aufgrund von konstruktiven Merkmalen für jeden Polarimeter-Typ angegeben werden.

1. Index: Stokes-Parameter
2. Index: Index der Polarisation

$$S = \begin{bmatrix} S_{0,0} & S_{0,1} & S_{0,2} & S_{0,3} \\ S_{1,0} & S_{1,1} & S_{1,2} & S_{1,3} \\ S_{2,0} & S_{2,1} & S_{2,2} & S_{2,3} \\ S_{3,0} & S_{3,1} & S_{3,2} & S_{3,3} \end{bmatrix}$$

Zu jeder der unter den Proben herausgesuchten vier Eingangspolarisationen sind die vier Detektorströme bekannt. Diese werden in die Spalten der Matrix I eingetragen.

$$I = \begin{bmatrix} I_{0,0} & I_{0,1} & I_{0,2} & I_{0,3} \\ I_{1,0} & I_{1,1} & I_{1,2} & I_{1,3} \\ I_{2,0} & I_{2,1} & I_{2,2} & I_{2,3} \\ I_{3,0} & I_{3,1} & I_{3,2} & I_{3,3} \end{bmatrix}$$

Die Instrumentenmatrix A ergibt sich zu:

$$A=I*S^{-1}$$

$$\begin{bmatrix} a_{00} & a_{01} & a_{02} & a_{03} \\ a_{10} & a_{11} & a_{12} & a_{13} \\ a_{20} & a_{21} & a_{22} & a_{23} \\ a_{30} & a_{31} & a_{32} & a_{33} \end{bmatrix} = \begin{bmatrix} I_{0,0} & I_{0,1} & I_{0,2} & I_{0,3} \\ I_{1,0} & I_{1,1} & I_{1,2} & I_{1,3} \\ I_{2,0} & I_{2,1} & I_{2,2} & I_{2,3} \\ I_{3,0} & I_{3,1} & I_{3,2} & I_{3,3} \end{bmatrix} * \begin{bmatrix} S_{0,0} & S_{0,1} & S_{0,2} & S_{0,3} \\ S_{1,0} & S_{1,1} & S_{1,2} & S_{1,3} \\ S_{2,0} & S_{2,1} & S_{2,2} & S_{2,3} \\ S_{3,0} & S_{3,1} & S_{3,2} & S_{3,3} \end{bmatrix}^{-1}$$

Ohne Einschränkung der Allgemeinheit wird die Gesamtleistung wird auf $S_0$=1 normiert.

$$S = \begin{bmatrix} 1 & 1 & 1 & 1 \\ S_{1,0} & S_{1,1} & S_{1,2} & S_{1,3} \\ S_{2,0} & S_{2,1} & S_{2,2} & S_{2,3} \\ S_{3,0} & S_{3,1} & S_{3,2} & S_{3,3} \end{bmatrix}$$

Beispiel:

Ohne Einschränkung der Allgemeinheit soll ein Polarimeter mit den Maxima-Polarisationen (Azimuth / Elliptizität) = (-22.5°/0°), (22.5°/0°), (90°/22.5°) und (90°/-22.5°) angenommen werden. Diese vier Polarisationen liegen sehr weit auf der Poincaré-Kugel auseinander und bilden nahezu ein Tetraeder mit dem maximal möglichen Volumen. Unter diesen Bedingungen hat die Instrumentenmatrix des Polarimeters eine große Determinante, d.h. die Polarisations-Meßwerte sind unsensibel gegenüber möglichen Meßfehlern.

Die vier Polarisationen bilden die S Matrix:

$$S = \begin{bmatrix} 1 & 1 & 1 & 1 \\ \frac{1}{\sqrt{2}} & \frac{1}{\sqrt{2}} & -\frac{1}{\sqrt{2}} & -\frac{1}{\sqrt{2}} \\ -\frac{1}{\sqrt{2}} & \frac{1}{\sqrt{2}} & 0 & 0 \\ 0 & 0 & \frac{1}{\sqrt{2}} & -\frac{1}{\sqrt{2}} \end{bmatrix}$$

4. Schritt: Einfügen von Korrektur-Parametern

Da die Polarisationen, bei denen die maximalen Detektorströme auftreten, durch das Scramblen der Polarisation nur sehr grob bekannt sind, kommen Korrektur-Parameter zum Einsatz, die bei richtiger Wahl zu den tatsächlichen Polarisationen führen.

Die Hinzufügung von Korrektur-Parametern bedeutet ein bildliches Verschieben der betreffenden Polarisation auf der Poincaré-Kugel. Daher bleibt die Leistung konstant P=1 und der Polarisationsgrad unverändert bei DOP=1. Die Stokes-Parameter $S_1$, $S_2$ und $S_3$ sind somit nicht mehr frei wählbar, sondern folgen der Beziehung:

$$S_1^2 + S_2^2 + S_3^2 = 1$$

Mit Veränderung von zwei Stokes-Parametern ergibt sich der dritte zwangsläufig nach diesem formelmäßigen Zusammenhang. Eine Mehrdeutigkeit durch die freie Wahl des Vorzeichens für den dritten Stokes-Parameter tritt nicht auf, da sich die Polarisationen immer nur um kleine Beträge ändern sollen.

Die Polarisation (-22.5°/0°), bei der der Strom $I_0$ näherungsweise sein Maximum aufweist, wird beschrieben mit:

$$\begin{bmatrix} S_{0,0} \\ S_{1,0} \\ S_{2,0} \\ S_{3,0} \end{bmatrix} = \begin{bmatrix} 1 \\ \frac{1}{\sqrt{2}} \\ -\frac{1}{\sqrt{2}} \\ 0 \end{bmatrix}$$

Sie wird als exakt angenommen und nicht korrigiert, da es keinen Sinn macht, alle vier Polarisationen zu verschieben.

Die vermeintliche Polarisation (22.5°/0°) wird beschrieben mit:

$$\begin{bmatrix} S_{0,1} \\ S_{1,1} \\ S_{2,1} \\ S_{3,1} \end{bmatrix} = \begin{bmatrix} 1 \\ \frac{1}{\sqrt{2}} + k_0 \\ \sqrt{1 - \left(\frac{1}{\sqrt{2}} + k_0\right)^2} \\ 0 \end{bmatrix}$$

Diese Polarisation ist und bleibt linear, durch $k_0$ wird lediglich nur der Azimuth einstellbar.

Die vermeintliche Polarisation (90°/22.5°) wird beschrieben mit:

$$\begin{bmatrix} S_{0,2} \\ S_{1,2} \\ S_{2,2} \\ S_{3,2} \end{bmatrix} = \begin{bmatrix} 1 \\ -\frac{1}{\sqrt{2}}+k_1 \\ k_2 \\ \sqrt{1-\left(-\frac{1}{\sqrt{2}}+k_1\right)^2-k_2{}^2} \end{bmatrix}$$

Die vermeintliche Polarisation (90°/-22.5°) wird beschrieben mit:

$$\begin{bmatrix} S_{0,3} \\ S_{1,3} \\ S_{2,3} \\ S_{3,3} \end{bmatrix} = \begin{bmatrix} 1 \\ -\frac{1}{\sqrt{2}}+k_3 \\ k_4 \\ -\sqrt{1-\left(-\frac{1}{\sqrt{2}}+k_3\right)^2-k_4{}^2} \end{bmatrix}$$

Die komplette S-Matrix ist demzufolge:

$$S = \begin{bmatrix} 1 & 1 & 1 & 1 \\ \frac{1}{\sqrt{2}} & \frac{1}{\sqrt{2}}+k_0 & -\frac{1}{\sqrt{2}}+k_1 & -\frac{1}{\sqrt{2}}+k_3 \\ -\frac{1}{\sqrt{2}} & \sqrt{1-\left(\frac{1}{\sqrt{2}}+k_0\right)^2} & k_2 & k_4 \\ 0 & 0 & \sqrt{1-\left(-\frac{1}{\sqrt{2}}+k_1\right)^2-k_2{}^2} & -\sqrt{1-\left(-\frac{1}{\sqrt{2}}+k_3\right)^2-k_4{}^2} \end{bmatrix}$$

Die Instrumentenmatrix wird mittels

$$A=I*S^{-1}$$

berechnet. Dabei werden zunächst alle Korrektor-Parameter $k_i$ =0 gesetzt.

5. Schritt: Invertieren der Instrumentenmatrix

$$B = A^{-1} \quad ; \quad \begin{bmatrix} b_{00} & b_{01} & b_{02} & b_{03} \\ b_{10} & b_{11} & b_{12} & b_{13} \\ b_{20} & b_{21} & b_{22} & b_{23} \\ b_{30} & b_{31} & b_{32} & b_{33} \end{bmatrix} = \begin{bmatrix} a_{00} & a_{01} & a_{02} & a_{03} \\ a_{10} & a_{11} & a_{12} & a_{13} \\ a_{20} & a_{21} & a_{22} & a_{23} \\ a_{30} & a_{31} & a_{32} & a_{33} \end{bmatrix}^{-1}$$

Das Polarimeter ist damit erstmals in der Lage, einen Strom-Vektor I in den zugehörigen, wenn auch sehr ungenauen Stokes-Vektor S umzuformen.

$$S = B * I \quad ; \quad \begin{bmatrix} S_0 \\ S_1 \\ S_2 \\ S_3 \end{bmatrix} = \begin{bmatrix} b_{00} & b_{01} & b_{02} & b_{03} \\ b_{10} & b_{11} & b_{12} & b_{13} \\ b_{20} & b_{21} & b_{22} & b_{23} \\ b_{30} & b_{31} & b_{32} & b_{33} \end{bmatrix} * \begin{bmatrix} I_0 \\ I_1 \\ I_2 \\ I_3 \end{bmatrix}$$

6. Schritt: Berechnung des Fehlerkriteriums

Für alle n der unter Punkt 1 aufgenommenen Stromvektoren $[I_0, I_1, I_2, I_3]^T$ wird der Polarisationsgrad DOP berechnet.

$$DOP_i = \frac{\sqrt{S_{1,i}^{\ 2} + S_{2,i}^{\ 2} + S_{3,i}^{\ 2}}}{S_{0,i}}$$

Das Fehlerkriterium $DOP_{diff}$ wird aus dem mittleren quadratischen Fehler zu DOP=1 bestimmt.

$$DOP_{diff} = \frac{1}{n}\sqrt{\sum_{i=1}^{n}(DOP_i - 1)^2}$$

7. Schritt: Iterative Minimierung des DOP-Fehlerkriteriums

Diese Fehlergröße $DOP_{diff}$ wird mittels iterativen Verfahren minimiert. Dazu werden nacheinander die Korrektur-Parameter $k_0$ bis $k_4$ ermittelt. Mit der Änderung eines Korrektur-Parameters wird die damit verknüpfte Polarisation verschoben, P=1 und DOP=1 werden beibehalten.

Ziel ist: $DOP_{diff} \rightarrow Min$

So gelangt man schrittweise zu den tatsächlichen Polarisationen bei denen die vier Strom-Vektoren aufgenommen wurden. Als Ergebnis des iterativen Prozesses erhält man diejenige Kalibriermatrix B, mit der das Fehlerkriterium am kleinsten ist. Die relative Kalibrierung des Polarimeters ist damit beendet.

8. Schritt: Herstellung einer absoluten Kalibrierebene

Um eine absolute Zuordnung zu einer Kalibrier-Ebene herzustellen, werden lediglich zwei verschiedene, bekannte Polarisationen benötigt, die nicht orthogonal sein dürfen. Das Polarimeter ist dann absolut kalibriert, wenn es

zwei als absolut vorgegebene, nicht orthogonale Polarisationen richtig anzeigt. Alle anderen Polarisationen werden dann ebenfalls richtig angezeigt.

Zur Ermittelung der zwei Polarisationen für die absolute Kalibrierung werden zwei Varianten vorgeschlagen:

Variante 1: Kalibrierung bezüglich einer äußeren Bezugsebene

Beispielhaft wird die horizontale Polarisation H und eine weitere lineare Polarisation, die etwa bei einem Azimuth von etwa +45° liegt, benutzt. Diese Polarisationen werden durch einen drehbaren Polarisator gewonnen.

Variante 2: Kalibrierung bezüglich einer inneren Bezugsebene

Eine innere Bezugsebene heißt z.B., dass man die Polarisationsrichtung von Polarisatoren oder Wellenplatten des Polarimeters selbst als Bezugspunkt benutzt.

Nach beschriebenem Beispiel sollen die beiden Polarisationen eine Bezugsebene bilden, die zu Maxima bei den Detektorströmen $I_0$ und $I_1$ führen. Die genaue Ermittlung dieser Polarisationen (bezüglich des relativen Bezugssystems) geschieht einfach durch iterative Suche der Maxima der Detektorströme $I_0$ und $I_1$. Dazu wird die bekannte Instrumentenmatrix A benötigt.

$$I = A * S \quad ; \quad \begin{bmatrix} I_0 \\ I_1 \\ I_2 \\ I_3 \end{bmatrix} = \begin{bmatrix} a_{00} & a_{01} & a_{02} & a_{03} \\ a_{10} & a_{11} & a_{12} & a_{13} \\ a_{20} & a_{21} & a_{22} & a_{23} \\ a_{30} & a_{31} & a_{32} & a_{33} \end{bmatrix} * \begin{bmatrix} S_0 \\ S_1 \\ S_2 \\ S_3 \end{bmatrix}$$

Ein Algorithmus erzeugt alle möglichen Stokes-Vektoren S mit P=1 und DOP=1 in einem Raster, das relativ grob sein kann. Parallel dazu wird der maximale Detektrorstrom $I_{0,max}$ ermittelt. Die Suche wird um das gefundene Maximum herum mit feinerem Raster fortgesetzt. Auf diese Weise kann der Stokes-Vektor (die Polarisation), bei der $I_0$=max wird, mit beliebiger Genauigkeit ermittelt werden.

Analog wird mit dem Detektorstrom $I_1$ verfahren. Die beiden Polarisationen sind folglich:

$$\begin{bmatrix} 1 \\ S_1 \\ S_2 \\ S_3 \end{bmatrix}_{0,\max} \quad ; \quad \begin{bmatrix} 1 \\ S_1 \\ S_2 \\ S_3 \end{bmatrix}_{1,\max}$$

Es wird jetzt eine unitäre Transformation gesucht, die P und DOP unberührt läßt, keine PDL beinhaltet, aber eine Rotation der Poincaré-Kugel bewirkt.

Variante 1 liefert zwei vom Polarimeter berechnete Polarisationen, die so transformiert werden müssen, damit sie mit den absoluten Vorgaben übereinstimmen. Variante 2 liefert zwei markante Polarisationen, die Bezug auf den inneren Aufbau des Polarimeters haben. Diese zwei beliebigen Polarisationen sollen ebenso in eine z.B. lineare Bezugsebene transformiert werden.

Die Aufgabe der absoluten Kalibrierung besteht immer in der Transformation von zwei nicht orthogonalen Polarisationen in zwei andere nicht orthogonale Polarisationen. Die Transformation entspricht einer Rotation auf der Poincaré-Kugel.

Gesucht wird die Transformationsmatrix M zwischen beliebigen Polarisationen $SOP_{in}$ und $SOP_{out}$.

$$S_{out} = M * S_{in} \quad ; \quad \begin{bmatrix} S_0 \\ S_1 \\ S_2 \\ S_3 \end{bmatrix}_{out} = \begin{bmatrix} 1 & 0 & 0 & 0 \\ 0 & m_{1,1} & m_{1,2} & m_{1,3} \\ 0 & m_{2,1} & m_{2,2} & m_{2,3} \\ 0 & m_{3,1} & m_{3,2} & m_{3,3} \end{bmatrix} * \begin{bmatrix} S_0 \\ S_1 \\ S_2 \\ S_3 \end{bmatrix}_{in}$$

Wegen der reinen Polarisationstransformation (keine Dämpfung, keine PDL) hat die Matrix m diese vereinfachte Form, wobei die 3x3 Matrix m

$$m = \begin{bmatrix} m_{1,1} & m_{1,2} & m_{1,3} \\ m_{2,1} & m_{2,2} & m_{2,3} \\ m_{3,1} & m_{3,2} & m_{3,3} \end{bmatrix}$$

eine orthogonale Matrix ist mit

$$\text{Det } m = 1$$

Die reduzierte 3x3 Matrix m korrespondiert zwischen den normierten Stokes-Parametern vor der Transformation $(s_1,s_2,s_3)_{in}$ und den normierten Stokes-Parametern nach der Transformation $(s_1,s_2,s_3)_{out}$.

$$\begin{bmatrix} s_1 \\ s_2 \\ s_3 \end{bmatrix}_{out} = \begin{bmatrix} m_{1,1} & m_{1,2} & m_{1,3} \\ m_{2,1} & m_{2,2} & m_{2,3} \\ m_{3,1} & m_{3,2} & m_{3,3} \end{bmatrix} * \begin{bmatrix} s_1 \\ s_2 \\ s_3 \end{bmatrix}_{in}$$

Es sei DOP=1, daher gilt für jeden Vektor $s_1^2 + s_2^2 + s_3^2 = 1$.

Ähnlich der Vier-Punkt-Kalibrierung nach [Azzam] kann hier auf analoge Weise die vollständige 3x3 Matrix m aus jeweils drei Polarisationszuständen vor und drei Polarisationszuständen nach der Transformation bestimmt werden.

$$m = s_{out} * s_{in}^{-1} \quad ; \quad m = \begin{bmatrix} s_{1,1} & s_{1,2} & s_{1,3} \\ s_{2,1} & s_{2,2} & s_{2,3} \\ s_{3,1} & s_{3,2} & s_{3,3} \end{bmatrix}_{out} * \begin{bmatrix} s_{1,1} & s_{1,2} & s_{1,3} \\ s_{2,1} & s_{2,2} & s_{2,3} \\ s_{3,1} & s_{3,2} & s_{3,3} \end{bmatrix}_{in}^{-1}$$

Dabei gibt der 1. Index den Stokes-Parameter, der 2. Index den Index der 3 Polarisationen (1,2,3) an.

Die ersten beiden Polarisationen die zur Übereinstimmung gebracht werden sollen, sind bekannt:

$$\begin{bmatrix} s_{1,1} \\ s_{2,1} \\ s_{3,1} \end{bmatrix}_{in} \text{ und } \begin{bmatrix} s_{1,1} \\ s_{2,1} \\ s_{3,1} \end{bmatrix}_{out} .$$

Die zweite Polarisatior

$$\begin{bmatrix} s_{1,2} \\ s_{2,2} \\ s_{3,2} \end{bmatrix}_{in}$$

hat auf der Poincaré-Kugel einen Winkelabstand zur 1. gegebenen Polarisation von $\alpha$.

$$\alpha = \arccos\left( \begin{bmatrix} s_{1,1} \\ s_{2,1} \\ s_{3,1} \end{bmatrix}_{in} * \begin{bmatrix} s_{1,2} \\ s_{2,2} \\ s_{3,2} \end{bmatrix}_{in} \right).$$

Denselben Abstand müssen auch die 1. und 2. Polarisation nach der Transformation einhalten. Es gilt also:

$$\arccos\left( \begin{bmatrix} s_{1,1} \\ s_{2,1} \\ s_{3,1} \end{bmatrix}_{in} * \begin{bmatrix} s_{1,2} \\ s_{2,2} \\ s_{3,2} \end{bmatrix}_{in} \right) = \arccos\left( \begin{bmatrix} s_{1,1} \\ s_{2,1} \\ s_{3,1} \end{bmatrix}_{out} * \begin{bmatrix} s_{1,2} \\ s_{2,2} \\ s_{3,2} \end{bmatrix}_{out} \right)$$

Außerdem soll gefordert werden, dass die 1. Polarisation identisch zu H ist und die 2. Polarisation mit theta>0 auf'dem Äquator liegt.

$$\begin{bmatrix} s_{1,1} \\ s_{2,1} \\ s_{3,1} \end{bmatrix}_{out} = \begin{bmatrix} 1 \\ 0 \\ 0 \end{bmatrix}_{out} \quad ; \quad \begin{bmatrix} s_{1,2} \\ s_{2,2} \\ s_{3,2} \end{bmatrix}_{out} * \begin{bmatrix} s_{1,2} \\ s_{2,2} \\ 0 \end{bmatrix}_{out} \quad ; \quad s_{2,2} > 0 \quad ; \quad s_{2,2\,out}^{\;2} + s_{1,2\,out}^{\;2} = 1$$

Der Winkel $\alpha$ zwischen 1. und 2. Polarisation spiegelt sich direkt in $s_{1,2\ out}$ und $s_{2,2\ out}$ wieder.

$$\arctan\frac{s_{2,2\,out}}{s_{1,2\,out}} = \arccos\left(\begin{bmatrix} s_{1,1} \\ s_{2,1} \\ s_{3,1} \end{bmatrix}_{in} * \begin{bmatrix} s_{1,2} \\ s_{2,2} \\ s_{3,2} \end{bmatrix}_{in}\right)$$

Die dritten noch fehlenden Vektoren für in und out können einfach durch die mittlere Polarisation der beiden ersten erhalten werden.

$$\begin{bmatrix} s_{1,3} \\ s_{2,3} \\ s_{3,3} \end{bmatrix}_{in} = \frac{\begin{bmatrix} s_{1,1} \\ s_{2,1} \\ s_{3,1} \end{bmatrix}_{in} + \begin{bmatrix} s_{1,2} \\ s_{2,2} \\ s_{3,2} \end{bmatrix}_{in}}{\sqrt{(s_{1,1}+s_{1,2})^2 + (s_{2,1}+s_{2,2})^2 + (s_{3,1}+s_{3,2})^2}}$$

$$\begin{bmatrix} s_{1,3} \\ s_{2,3} \\ s_{3,3} \end{bmatrix}_{out} = \frac{\begin{bmatrix} 1 \\ 0 \\ 0 \end{bmatrix}_{out} + \begin{bmatrix} s_{1,2} \\ s_{2,2} \\ 0 \end{bmatrix}_{out}}{\sqrt{(1+s_{1,2})^2 + s_{2,2}{}^2}}$$

Damit sind alle drei Polarisationen vor der Transformation (in) und nach der Transformation (out) bekannt. Die Matrix m ergibt sich zu:

$$m = s_{out} * s_{in}{}^{-1} \quad ; \quad m = \begin{bmatrix} s_{1,1} & s_{1,2} & s_{1,3} \\ s_{2,1} & s_{2,2} & s_{2,3} \\ s_{3,1} & s_{3,2} & s_{3,3} \end{bmatrix}_{out} * \begin{bmatrix} s_{1,1} & s_{1,2} & s_{1,3} \\ s_{2,1} & s_{2,2} & s_{2,3} \\ s_{3,1} & s_{3,2} & s_{3,3} \end{bmatrix}_{in}^{-1}$$

Die durch m verkörperte Transformation entspricht der Rotation des kartesischen Koordinatensystems ($s_1$, $s_2$,$s_3$) innerhalb der Poincaré-Kugel.

$$\begin{bmatrix} s_1 \\ s_2 \\ s_3 \end{bmatrix}_{out} = \begin{bmatrix} \cos\alpha_1 & \cos\beta_1 & \cos\chi_1 \\ \cos\alpha_2 & \cos\beta_2 & \cos\chi_2 \\ \cos\alpha_3 & \cos\beta_3 & \cos\chi_3 \end{bmatrix} * \begin{bmatrix} s_1 \\ s_2 \\ s_3 \end{bmatrix}_{in}$$

Dabei sind:

$\alpha_1$, $\beta_1$, $\chi_1$ Winkel zwischen den $s_1$-Achsen vor und nach der Drehung,
$\alpha_2$, $\beta_2$, $\chi_2$ Winkel zwischen den $s_2$-Achsen vor und nach der Drehung,

$\alpha_3$, $\beta_3$, $\chi_3$ Winkel zwischen den $s_3$-Achsen vor und nach der Drehung.

Es gilt

$$Det\begin{bmatrix}\cos\alpha_1 & \cos\beta_1 & \cos\chi_1\\ \cos\alpha_2 & \cos\beta_2 & \cos\chi_2\\ \cos\alpha_3 & \cos\beta_3 & \cos\chi_3\end{bmatrix}=1$$

Die gesamte Müller-Matrix der Polarisationstransformation ist:

$$M=\begin{bmatrix}1 & 0 & 0 & 0\\ 0 & m_{1,1} & m_{1,2} & m_{1,3}\\ 0 & m_{2,1} & m_{2,2} & m_{2,3}\\ 0 & m_{3,1} & m_{3,2} & m_{3,3}\end{bmatrix}$$

Diese Matrix M zur absoluten Kalibrierung kann unmittelbar mit in die inverse Intrumenten-Matrix B einfließen:

$$S=M*B*I\ ;\qquad \begin{bmatrix}S_0\\ S_1\\ S_2\\ S_3\end{bmatrix}=\begin{bmatrix}1 & 0 & 0 & 0\\ 0 & m_{1,1} & m_{1,2} & m_{1,3}\\ 0 & m_{2,1} & m_{2,2} & m_{2,3}\\ 0 & m_{3,1} & m_{3,2} & m_{3,3}\end{bmatrix}*\begin{bmatrix}b_{00} & b_{01} & b_{02} & b_{03}\\ b_{10} & b_{11} & b_{12} & b_{13}\\ b_{20} & b_{21} & b_{22} & b_{23}\\ b_{30} & b_{31} & b_{32} & b_{33}\end{bmatrix}*\begin{bmatrix}I_0\\ I_1\\ I_2\\ I_3\end{bmatrix}$$

Die Matrizen M und B werden zweckmäßig zu einer Matrix C zusammengefaßt.

$$S=C*I\qquad ;\qquad \begin{bmatrix}S_0\\ S_1\\ S_2\\ S_3\end{bmatrix}=\begin{bmatrix}c_{00} & c_{01} & c_{02} & c_{03}\\ c_{10} & c_{11} & c_{12} & c_{13}\\ c_{20} & c_{21} & c_{22} & c_{23}\\ c_{30} & c_{31} & c_{32} & c_{33}\end{bmatrix}*\begin{bmatrix}I_0\\ I_1\\ I_2\\ I_3\end{bmatrix}$$

Die Matrix C beinhaltet die durch den iterativen Prozeß erhaltene sehr gute relative Genauigkeit zusammen mit der absoluten Ausrichtung der berechneten Polarisationen.

**Beschreibung der Zeichnungen**

| | |
|---|---|
| Fig. 1 | Aufbau zur absoluten Kalibrierung eines Polarimeters mit deterministischem Polarisationssteller |
| Fig. 2 | Aufbau zur Kalibrierung eines Polarimeters mit nicht deterministischem Polarisationssteller und Vergleichs-Polarimeter |
| Fig. 3 | Aufbau zur relativen Kalibrierung eines Polarimeters mit nicht deterministischem Polarisationssteller jedoch ohne Vergleichs Polarimeter |

(fortgesetzt)

| | |
|---|---|
| Fig. 4 | Aufbau zur absoluten Kalibrierung eines Inline-Faser-Polarimeters mit nichtdeterministischem Polarisationssteller und Vergleichs Polarimeter |
| Fig. 5 | Verteilung der vier Kalibrier- und weiterer zehn möglicher Hilfs Polarisationszuständen auf der Poincaré-Kugel (13) |

**Bezugszeichenliste**

| | |
|---|---|
| 1 | Laser |
| 2 | Manueller Polarisationssteller |
| 3 | Deterministischer Polarisationssteller |
| 4 | Polarisator |
| 5 | λ/4 Wellenplatte |
| 6 | λ/2 Wellenplatte |
| 7 | zu kalibrierendes Polarimeter |
| 8 | Auswerte- und Anzeigeeinheit |
| 9 | Manueller Polarisationssteller |
| 10 | Koppler |
| 11 | Vergleichs-Polarimeter |
| 12 | zu kalibrierendes Faser-Polarimeter |
| 13 | Poincaré-Kugel |

**Patentansprüche**

**1.** Verfahren zur Kalibrierung eines vollständigen Polarimeters, wobei das Polarimeter mindestens vier Detektoren aufweist, deren Detektorströme mit den zu messenden Stokes-Parametern jeweils in Beziehung stehen, folgende Schritte umfassend:

a) Einspeisen von Eingangspolarisationen mit jeweils dem gleichen Polarisationsgrad in das zu kalibrierende Polarimeter;
b) Erfassen der Detektorströme bei mindestens vier verschiedenen Kalibrier-Polarisationen;
c) Erfassen der Detektorströme bei mindestens einer weiteren Eingangspolarisation mit demselben Polarisationsgrad wie in Schritt a);
d) Bestimmung der Instrumentenmatrix in Abhängigkeit der in Schritt b) erfassten mindestens vier Kalibrier-Polarisationen und den zugeordneten Detektorströmen;
**dadurch gekennzeichnet,**
**daß** mindestens eine der Kalibrier-Polarisationen mit Hilfe von mindestens einem Korrektur-Parameter als Variable dargestellt wird.

**2.** Verfahren nach Anspruch 1,
**gekennzeichnet durch** folgenden weiteren Schritt (nach Schritt d)?:

e) Optimieren, vorzugsweise iterativ, des mindestens einen Korrektur-Parameters.

**3.** Verfahren nach Anspruch 2,
**dadurch gekennzeichnet,**
**daß** in Schritt e) der Zielparameter der Optimierung der Polarisationsgrad ist.

**4.** Verfahren nach einem der vorhergehenden Ansprüche,
**dadurch gekennzeichnet,**
**daß** die Detektorströme und die Stokes-Parameter jeweils in linearer Abhängigkeit stehen.

**5.** Verfahren zur Kalibrierung eines vollständigen Polarimeters nach einem der vorhergehenden Ansprüche,
**dadurch gekennzeichnet, dass** die Kalibrier-Polarisationen mit Hilfe eines beliebigen Polarisationsstellers und eines Vergleichs-Polarimeters (11) eingestellt werden, wobei das Vergleichs-Polarimeter (11) ungenauer sein kann als die angestrebte Genauigkeit des zu kalibrierenden Polarimeters (7 bzw. 12).

**6.** Verfahren zur Kalibrierung eines vollständigen Polarimeters nach einem der vorhergehenden Ansprüche,
**dadurch gekennzeichnet, dass** die Kalibrier-Polarisationen aus mehreren, mit Hilfe eines beliebigen Polarisationsstellers erzeugten Polarisationen ausgesucht werden und die Auswahl so erfolgt, dass die Detektorströme eine grobe Zuordnung zu bekannten Polarisationen ermöglichen.

**7.** Verfahren zur Kalibrierung eines vollständigen Polarimeters nach einem der vorhergehenden Ansprüche,
**dadurch gekennzeichnet, dass** die mindestens eine für das Iterationsverfahren notwendige zusätzliche Eingangspolarisation entweder ein zufälliger und unbekannter Polarisationszustand oder ein deterministischer Polarisationszustand sein kann.

**8.** Verfahren zur Kalibrierung eines vollständigen Polarimeters nach einem der vorhergehenden Ansprüche,
**dadurch gekennzeichnet, dass** die für das Iterationsverfahren in das Polarimeter (7 bzw. 12) eingespeisten zusätzlichen Polarisationszustände vorteilhafterweise möglichst gleichverteilt auf der Poincaré-Kugel (13) liegen.

**9.** Verfahren zur Kalibrierung eines vollständigen Polarimeters nach einem der vorhergehenden Ansprüche,
**dadurch gekennzeichnet, dass** der konstante Polarisationsgrad DOP der zur Kalibrierung verwendeten Eingangspolarisationen vorteilhafterweise DOP gleich 1, also ein Polarisationsgrad von 100% ist.

**10.** Verfahren zur Kalibrierung eines vollständigen Polarimeters nach einem der vorhergehenden Ansprüche,
**dadurch gekennzeichnet, dass** das Optimierungskriterium nach der Formel

$$DOP_{diff} = \frac{1}{n}\sqrt{\sum_{i=1}^{n}\left(DOP_i - 1\right)^2}$$

berechnet wird.

**11.** Verfahren zur Kalibrierung eines vollständigen Polarimeters nach einem der vorhergehenden Ansprüche,
**dadurch gekennzeichnet, dass** zur Berechnung des Optimierungskriteriums nur der gemessene Polarisationsgrad aller zusätzlich eingespeisten Eingangspolarisationen verwendet wird.

**12.** Verfahren zur Kalibrierung eines vollständigen Polarimeters nach einem der vorhergehenden Ansprüche,
**dadurch gekennzeichnet, dass** die iterative Optimierung der Korrektur-Parameter nach einem Trial-and-Error-Verfahren erfolgt.

**13.** Verfahren zur Kalibrierung eines vollständigen Polarimeters nach einem der vorhergehenden Ansprüche,
**dadurch gekennzeichnet, dass** die optischen Leistungen bei den Polarisationszuständen des ersten Kalibrierschrittes mit einem Leistungsmessgerät erfasst werden und dass entweder die jeweiligen Detektorströme auf eine konstante Leistung normiert werden, bevor diese in die Bestimmung der Instrumentenmatrix eingehen oder dass die Leistungswerte direkt in die Berechnung der Instrumentenmatrix eingehen.

**14.** Verfahren zur Kalibrierung eines vollständigen Polarimeters nach einem der vorhergehenden Ansprüche,
**dadurch gekennzeichnet, dass** zur Kalibrierung der Leistungsanzeige des Polarimeters, wenn beispielsweise mit normierten Leistungen gearbeitet wurde, eine oder mehrere Vergleichsmessungen mit einem Leistungsmessgerät durchgeführt werden und die Leistungsanzeige des Polarimeters (7 bzw. 12) mit einem Korrekturwert versehen wird.

15. Verfahren zur Kalibrierung eines vollständigen Polarimeters nach einem der vorhergehenden Ansprüche, **dadurch gekennzeichnet, dass** nach abgeschlossener relativer Kalibrierung, beispielsweise durch Verwendung zufälliger Eingangspolarisationen für das Kalibrierverfahren, eine absolute Kalibrierung erfolgten kann, die durch Polarisations-Transformation erreicht wird.

16. Verfahren zur Kalibrierung eines vollständigen Polarimeters nach Anspruch 15, **dadurch gekennzeichnet, dass** für die absolute Kalibrierung lediglich zwei lineare Polarisationen in das Polarimeter eingespeist werden, wobei bei einem Polarisationszustand der Azimuth bekannt sein muss und bei dem zweiten Polarisationszustand lediglich bekannt sein muss, ob der Azimuthwinkel größer oder kleiner als der Azimuthwinkel des anderen Polarisationszustandes ist.

17. Verfahren zur Kalibrierung eines vollständigen Polarimeters nach Anspruch 15, **dadurch gekennzeichnet, dass** für die absolute Kalibrierung die beiden relativen Polarisationszustände aus der Instrumentenmatrix berechnet werden, bei denen bei konstanter Leistung zwei Detektorströme ihr Maximum erreichen würden und diese beiden relativen Polarisationszustände auf bekannte, absolute Polarisationen transformiert werden.

18. Verfahren zur Kalibrierung eines vollständigen Polarimeters nach Anspruch 15, **dadurch gekennzeichnet, dass** die absolute Kalibrierung bezüglich Polarisationen erfolgt, die durch die Doppelbrechungsachsen einer PM-Faser oder die RotationsAchsen eines beliebigen Polarisationsstellers definiert sind.

19. Vorrichtung zur Durchführung eines Verfahrens nach einem der Ansprüche 1 bis 18.

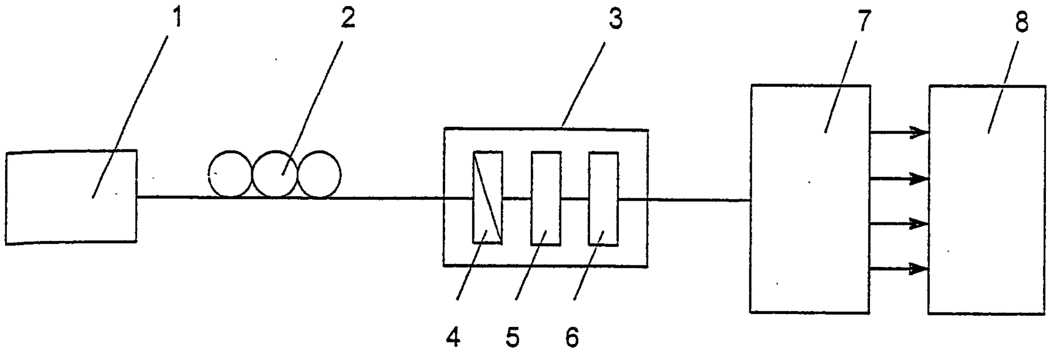


Fig. 1

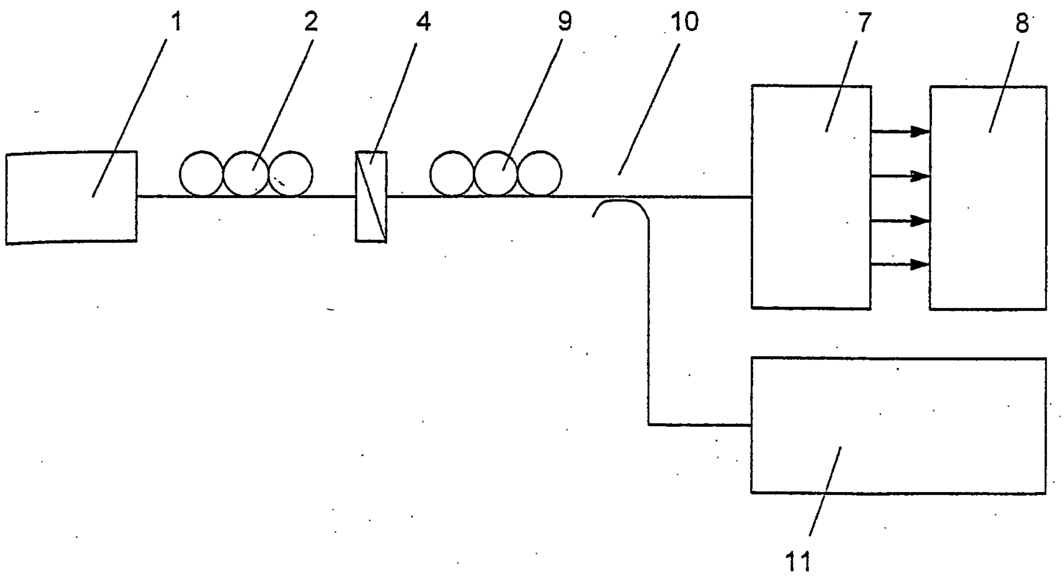


Fig. 2

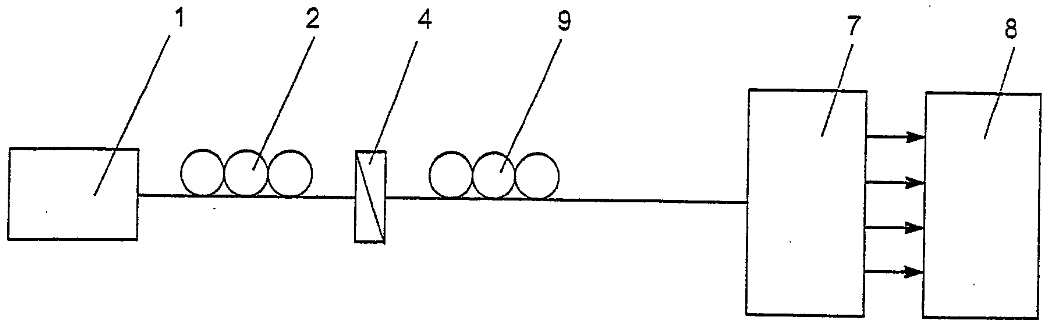


Fig. 3

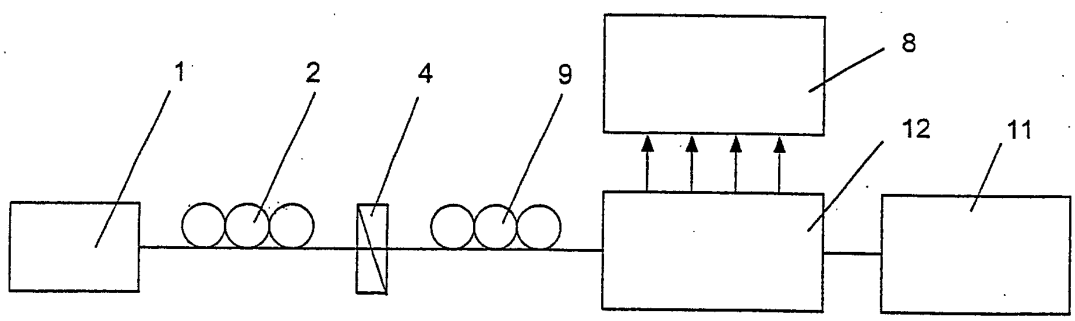


Fig. 4

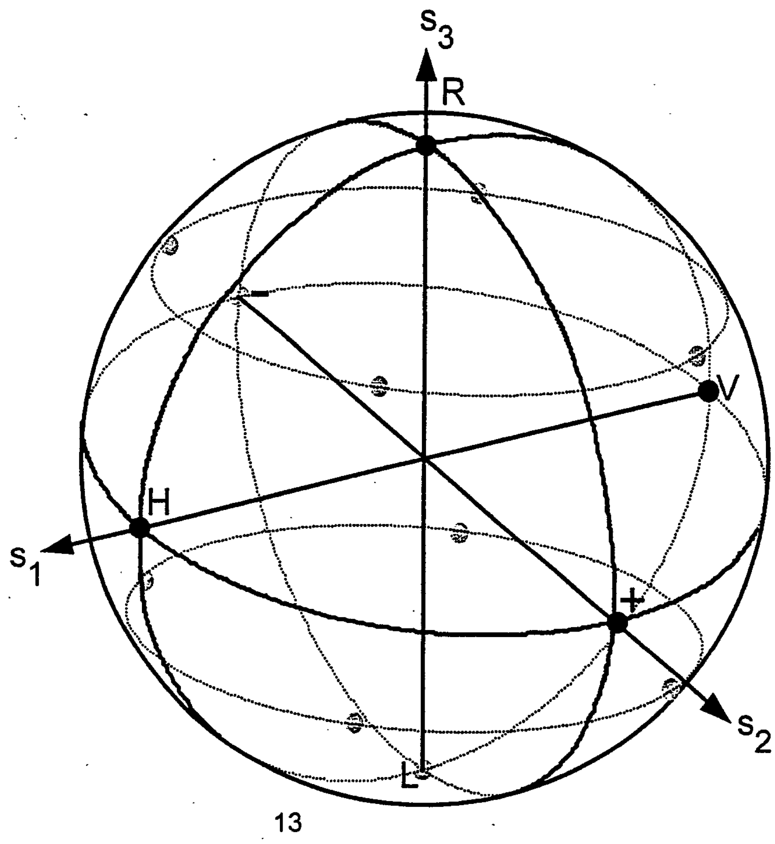


Fig. 5

Europäisches Patentamt

# EUROPÄISCHER RECHERCHENBERICHT

Nummer der Anmeldung
EP 02 00 8021

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,A | AZZAM R M A ET AL: "CONSTRUCTION, CALIBRATION, AND TESTING OF A FOUR-DETECTOR PHOTOPOLARIMETER" REVIEW OF SCIENTIFIC INSTRUMENTS, AMERICAN INSTITUTE OF PHYSICS. NEW YORK, US, Bd. 59, Nr. 1, 1988, Seiten 84-88, XP002034814 ISSN: 0034-6748 * Absatz '00II! * --- | 1,19 | G01J4/04 |
| D,A | US 5 296 913 A (HEFFNER BRIAN L) 22. März 1994 (1994-03-22) * das ganze Dokument * ----- | 1,19 | |
| | | | **RECHERCHIERTE SACHGEBIETE (Int.Cl.7)** |
| | | | G01J<br>G01N |

Der vorliegende Recherchenbericht wurde für alle Patentansprüche erstellt

| Recherchenort | Abschlußdatum der Recherche | Prüfer |
|---|---|---|
| DEN HAAG | 11. Oktober 2002 | De Buyzer, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 02 00 8021

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-10-2002

| Im Recherchenbericht angeführtes Patentdokument | Datum der Veröffentlichung | Mitglied(er) der Patentfamilie | Datum der Veröffentlichung |
|---|---|---|---|
| US 5296913 A | 22-03-1994 | DE 69303571 D1 | 14-08-1996 |
| | | DE 69303571 T2 | 07-11-1996 |
| | | EP 0592187 A1 | 13-04-1994 |
| | | JP 6201473 A | 19-07-1994 |

EPO FORM P0461

Für nähere Einzelheiten zu diesem Anhang : siehe Amtsblatt des Europäischen Patentamts, Nr.12/82